Europäisches Patentamt

European Patent Office

Office européen des brevets

(19)

(11) Publication number: **0 004 167**
**B1**

(12) # EUROPEAN PATENT SPECIFICATION

(45) Date of publication of patent specification: **02.06.82**

(51) Int. Cl.³: **G 21 C 15/18, F 28 B 3/06**

(21) Application number: **79300320.3**

(22) Date of filing: **02.03.79**

(54) **Apparatus for emergency cooling of a steam generator of a nuclear power plant.**

(30) Priority: **04.03.78 DE 2809466**

(43) Date of publication of application:
**19.09.79 Bulletin 79/19**

(45) Publication of the grant of the patent:
**02.06.82 Bulletin 82/22**

(84) Designated Contracting States:
**FR GB IT**

(56) References cited:
**DE - A - 1 936 576**
**DE - A - 2 305 717**
**DE - A - 2 336 146**
**DE - A - 2 430 725**
**DE - B - 1 185 309**
**DE - B - 2 212 761**
**FR - A - 2 294 517**
**GB - A - 992 033**
**NL - A - 67 11957**
**NL - A - 75 10570**
**US - A - 4 051 892**

(73) Proprietor: **BROWN BOVERI REAKTOR GmbH**
**Dudenstrasse 44**
**D-6800 Mannheim 1 (DE)**

(72) Inventor: **Stiefel, Max**
**Thüringerstrasse 69**
**D-6800 Mannheim 31 (DE)**

(74) Representative: **Cotter, Ivan John et al,**
**D. YOUNG & CO. 10 Staple Inn**
**London WC1V 7RD (GB)**

Courier Press, Leamington Spa, England.

## Apparatus for emergency cooling of a steam generator of a nuclear power plant

This invention relates to apparatus for emergency cooling of a steam generator of a nuclear power plant.

A disorder occurring in a nuclear power plant may necessitate the rapid shutdown of the nuclear reactor. Until now the steam produced in such a case over a prolonged period of time has been blown off over the roof.

It has been proposed in DE—A—2 459 150 that the resulting steam be condensed over auxiliary heat sinks and the condensate returned to the steam generator.

Because of the high blow-off efficiency of the blow-off valves the steam is first blown off over the roof even when operating with a condenser of known type, and only the amount of heat limited by the design of the emergency power supply and the permitted river contamination is evacuated through a condenser.

To ensure a supply of emergency feed water, there is an additional need for sufficiently large tanks or vessels when it is inadmissible or impossible to resort to other forms of water supply. Moreover, in the case of emergency condensers of known design the machine and pipe technology involved are very costly. Furthermore, a feed-in system depending directly on condensation is not regarded as being very reliable.

An article entitled 'Control and Instrumentation' by E. W. Hagen, published in Nuclear Safety, Vol. 16, No. 2, March–April 1975, page 150 *et seq*, discloses apparatus for emergency cooling of a steam generator of a fast gas reactor nuclear power plant, comprising a closed circuit for condensing blown-off steam and returning the resulting condensate to the steam generator as feed water, wherein a blow-off pipe is arranged to direct the steam into a closed vessel comprising a water space and a gas space and an end part of the blow-off pipe extends into the water space to distribute the steam.

NL—A—6711957 discloses a blow-off pipe from a steam generator of a nuclear power plant, the pipe being arranged to direct the steam into a closed vessel comprising a water space and a gas space, an end part of the pipe extending into the water space and being designed as a steam distributor arranged opposite a bundle of heat exchanger tubes.

DE—A—2 305 717 discloses a closed vessel for steam generators of nuclear power plants including a water space and a gas space, a steam pipe extending into the water space, and radial pipes extending from the bottom of the steam pipe and interconnected at their outer ends by a ring pipe lying in a horizontal plane and having nozzle openings in its upper half.

In view of the state of the art, the object of the present invention is to provide an improved emergency cooling apparatus for a steam generator unit of a nuclear power plant, and to carry out the emergency cooling solely by means of the resulting condensate.

According to the invention there is provided apparatus for emergency cooling of a steam generator of a nuclear power plant, comprising a closed circuit for condensing blown-off steam and returning the resulting condensate to the steam generator as feed water, wherein a blow-off pipe is arranged to direct the steam into a closed vessel comprising a water space and a gas space and an end part of the blow-off pipe extends into the water space to distribute the steam, characterised in that a bundle of heat exchanger tubes extends through the water space of the vessel, the end part of the blow-off pipe extending into the water space, is angularly bent and is designed as a steam distributor nozzle having a plurality of nozzle openings therein, the steam distributor nozzle is arranged essentially below and to the side of the bundle of heat exchanger tubes, and a flap for opening and closing the nozzle openings is rotatably disposed in a holder connected to the steam distributor nozzle in the region of the nozzle openings.

Such an apparatus offers the advantage that the thermosyphon effect and hence the efficiency of the apparatus can be considerably increased, so that the amount of steam blown off can be taken up in a relatively small vessel. Further, water does not penetrate from the vessel into the blow-off pipe when the flap closes the nozzle openings.

The invention will now be further described, by way of non-limitative example, with reference to the accompanying schematic drawings, in which:

Figure 1 is a general schematic diagram of a closed emergency cooling apparatus embodying the invention;

Figure 2 is an enlarged view of the region of a vessel of the apparatus of Figure 1;

Figure 3 is an enlarged view of a part A" of Figure 2; and

Figure 4 is a section taken along the line IV—IV of Figure 3.

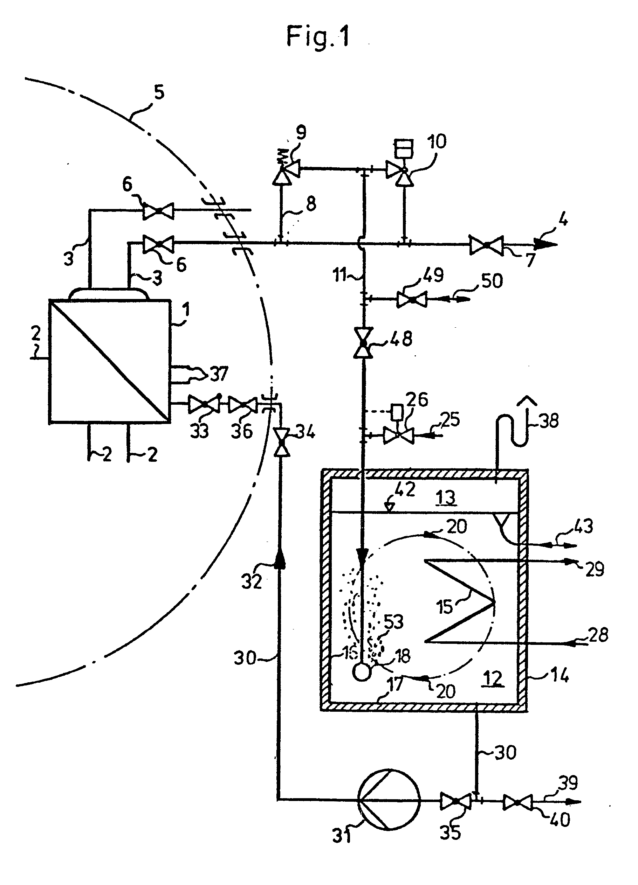

Figure 1 shows a steam generator 1 connected to an associated nuclear reactor (not shown) via primary coolant pipes 2. A primary coolant flows through the steam generator 1 and thereby heats feed water flowing countercurrently thereto, so that steam flows through pipes 3 in the direction of an arrow 4 to a turbine (not shown). The pipes 3 pass through a safety shield 5 and are provided inside and outside the safety shield with shutoff valves 6, 7. In the event of trouble in the nuclear unit it may be necessary to shut off the nuclear reactor and close the outer shutoff valve 7. The residual heat produced after the shutting-off process is evacuated by means of apparatus embodying the invention. For easier visualisation, the apparatus is shown only for a single pipe *3*.

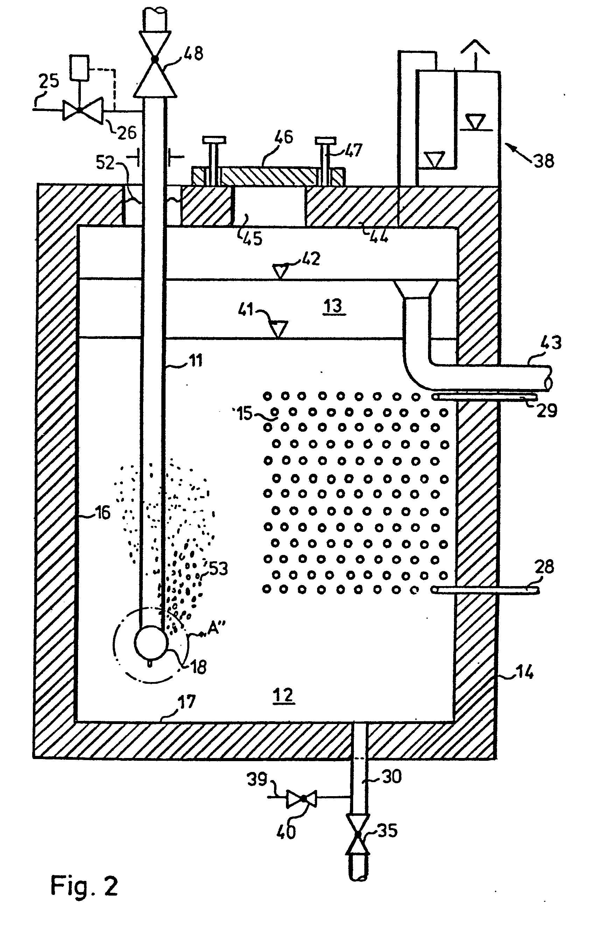

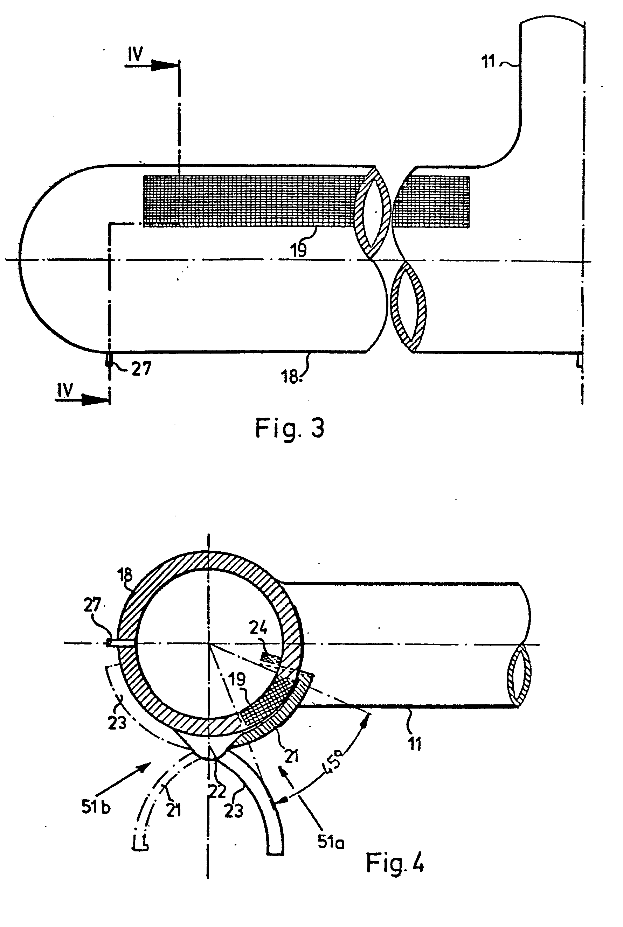

Incorporated in a by-pass pipe *8* are a safety valve *9* and a blow-off valve *10*. When one of the valves *9* or *10* is actuated, which generally occurs upon closing of the shutoff valve *7*, the resulting steam is passed through a blow-off pipe *11* into a vessel *14* comprising, in a manner known *per se*, a water space *12* and a gas space *13*, and condenses in said vessel. The blow-off pipe *11* is passed into the vessel with the aid of a compensator *52* (Figure 2). To achieve optimum efficiency a nest or bundle of heat exchanger tubes *15* is passed through the water space *12* of the condenser *14* in order to cool the condensate, as can be seen, in particular, in the enlarged drawing of Figure 2. The end of the blow-off pipe *11* dipping into the water space *12* is bent at a right angle (Figure 3) and extends parallel to the side wall *16* and to the bottom *17* of the vessel *14*. This bent end part of the pipe *11* is designed as a steam distributor nozzle *18* having nozzle openings *19* therein and is arranged opposite to the nest or bundle of heat exchanger tubes *15*. More specifically, as shown best in Figures 1 and 2, the nozzle *18* is arranged essentially below and to the side of the nest or bundle of heat exchanger tubes *15*.

The bundle of heat exchanger tubes *15* is supplied with cooling liquid through a feed pipe *28* and a discharge pipe *29*.

In view of the activity and pressure relationships there is no need to provide a connection to a nuclear intercooling cycle, i.e. the heat exchanger may be charged either directly with river water or with water from a cooling tower cycle.

The steam to be condensed, represented as steam bubbles *53*, flows through the nozzle openings *19* and condenses in the water space *12*.

With the aid of an emergency feed water pump *31* the cold condensate is urged via a pipe *30* in the direction of an arrow *32* into the steam generator *1* as feed water. Associated with the pipe *30* are shutoff valves *33, 34* and *35* and a back flow barrier or check valve *36*. At connection points *37*, condensate feed connections can be provided for additional vessels.

As a result of the above-described arrangement the circulation of the cold and warm zones in the water space *12* of the vessel *14* is considerably faster, so that an optimum mixing of condensate and steam is achieved. The cold water/warm water cycle is indicated by arrows *20* in Figure 1.

The steam distributor nozzle *18* shown in Figures 3 and 4 has about 15,000 nozzle openings *19* of 5 mm diameter in the upper half of the pipe cross-section and extending over 45° of the periphery of the pipe, i.e. in a pipe angle segment of 45°. (More generally, the pipe angle segment can range from 22.5° to 67.5°). When the openings are 20 mm apart and the diameter of the pipe is 1 m, the resulting effective nozzle cross-sectional area is about 0.3 m². To prevent condensation impacts during the introduction of the steam into the steam distributor nozzle *18*, the nozzle openings *19* are provided with a flap *21* which is fastened to a support *22* in a rotatable manner and is provided with a counterweight *23* for compensation of the kinetic forces to improve control of the movement of the flap and make it easier to close. A safety mechanism *24* locks the flap *21* in a closed position *51a* in which it closes the nozzle openings *19*, and prevents water from the vessel *14* entering the blow-off pipe *11*.

The safety mechanism *24* is preferably released by thermal means, so that the steam flowing out of the blow-off pipe *11* releases the safety mechanism automatically and the flap moves *21* into an open position *51b* indicated by chain-dotted lines. In this case the counterweight *23* serves as a stop and the opened flap *21* serves as a baffle plate for the outflowing steam. When the blow-off process has been concluded the flap *21* is again swung into the closed position. The counterweight *23* is designed in such a way that it presents less flow resistance to the water than does the flap *21*.

Above a certain size it is advisable to use not one but several flaps.

With the flap *21* closed the blow-off pipe *11* is continuously charged, through a pipe *25* and a reducing valve *26* regulated by follow-up pressure, with nitrogen at a pressure of about 2.1 bar, and any leakage water which may have penetrated into the apparatus is removed through a valve *27* (Figure 3) disposed at the bottom of the steam distributor nozzle *18*. In the same way the blow-off pipe *11* and the steam distributor nozzle *18* can be flushed by opening the valve *27*. Since the gas space *13* of the vessel *14* also contains nitrogen at a pressure of about 1.1 bar, it is ensured that the contents of the vessel *14* and the inner side of the blow-off pipe *11* do not come in contact with oxygen. In this manner the nitrogen cushion in the blow-off pipe *11*, together with the flap *21*, prevent dangerous condensation impacts and water impacts at the start of the blow-off process. The nitrogen cushion is maintained until displaced by steam.

Should increased contamination develop in the interior of the vessel *14* during a disorder as a result of increased operational leakages in the steam generator, then the gas space *13* can be connected to a waste gas processing unit of the nuclear power plant through a ventilating and venting device *38*, and the water space *12* can be connected to a water treatment unit of the nuclear power plant through a discharge pipe *39* and a valve *40*.

The normal water level of the water space *12* of the vessel *14* is indicated by a numeral *41* (Figure 2). Should the water level exceed a level *42* (Figures 1 and 2), an overflow *43* ensures that a maximum water level is not exceeded.

The overflow 43 can be connected to a redundant vessel 14 and/or to the waste water treatment unit of the nuclear power plant. As a protection against excess pressures an upper wall or cover 44 (Figure 2) of the vessel 14 comprises a vent 45 provided with a cover plate 46 which is guided by belts 47 whose intrinsic weight is chosen in such a way that the plate lifts off at a given pressure.

For maintenance operations in the vessel 14 the blow-off pipe 11 can be connected with a redundant vessel via a pipe 50, by closing a valve 48 and opening a valve 49.

## Claims

1. Apparatus for emergency cooling of a steam generator (1) of a nuclear power plant, comprising a closed circuit for condensing a blown-off steam and returning the resulting condensate to the steam generator (1) as feed water, wherein a blow-off pipe (11) is arranged to direct the steam into a closed vessel (14) comprising a water space (12) and a gas space (13) and an end part of the blow-off pipe (11) extends into the water space (12) to distribute the steam, characterised in that a bundle of heat exchanger tubes (15) extends through the water space of the vessel (14), the end part of the blow-off pipe (11) extending into the water space is angularly bent and is designed as a steam distributor nozzle (18) having a plurality of nozzle openings (19) therein, the steam distributor nozzle (18) is arranged essentially below and to the side of the bundle of heat exchanger tubes, and a flap (21) for opening and closing the nozzle openings (19) is rotatably disposed in a holder (22) connected to the steam distributor nozzle (18) in the region of the nozzle openings (19).

2. Apparatus according to Claim 1, wherein the end of the blow-off pipe (11) designed as a steam distributor nozzle (18) extends parallel to the bottom (17) of the vessel (14) and parallel to a side wall (16) of the vessel.

3. Apparatus according to Claim 2, wherein the nozzle openings (19) are arranged in the upper half of the pipe cross-section adjacent the bundle of heat exchanger tubes (15) in a pipe angle range of from 22.5° to 67.5°.

4. Apparatus according to Claim 3, wherein the flap (21) closes off the nozzle openings when in one position (51a) and serves as a baffle plate when in another position (51b).

5. Apparatus according to Claim 4, wherein the flap (21) can be locked in each of its positions (51a, 51b).

6. Apparatus according to any one of the preceding claims, wherein the flap (21) is provided with a counterweight (23).

7. Apparatus according to any one of the preceding claims, comprising means to charge the blow-off pipe (11) with inert gas through a pipe (25) when the flap (21) closes the nozzle openings, whereby the inert gas is present in the blow-off pipe until displaced by steam.

8. Apparatus according to Claim 7, wherein by opening of a valve (27) the blow-off pipe (11) and the steam distributor nozzle (18) can be flushed.

9. Apparatus according to any one of the preceding claims, wherein the gas space (13) of the vessel (14) is connected to a waste gas purification unit of the nuclear power plant and the water space (12) of the vessel is connected to a waste water treatment unit of the nuclear power plant.

10. Apparatus according to Claim 9, wherein the vessel (14) has an overflow (43) connected to a redundant vessel (14) and/or to the waste water treatment unit.

11. Apparatus according to any one of the preceding claims, wherein an upper wall (44) of the vessel (14) contains a relief vent (45) provided with a cover plate (46).

## Patentansprüche

1. Einrichtung zur Nokühlung eines Dampferzeugers (1) eines Kernkraftwerkes mit einem geschlossenen Kreislauf zum Kondensieren abgeblasenen Dampfes und Rückführen des gewonnenen Kondensats zu dem Dampferzeuger (1) als Spiesewasser, wobei eine Abblaseleitung (11) angeordnet ist, um Dampf in einen geschlossenen Behälter (14) mit einem Wasser- (12) und einem Gasraum (13) zu führen, und ein Endteil der Abblaseleitung (11) sich in den Wasserraum (12) erstreckt, um den Dampf zu verteilen, dadurch gekennzeichnet, daß ein Bündel (15) von Wärmetauscherrohren sich durch den Wasserraum des Behälters (14) erstreckt, der sich in den Wasserraum erstreckende Endteil der Abblaseleitung (11) abgewinkelt und als Dampfverteilungsdüse (18) mit einer Vielzahl von darin befindlichen Düsenöffnungen (19) ausgebildet ist, daß die Dampfverteilungsdüse (18) im wesentlichen unter und an der Seite des Wärmetauscherrohrbündels angeordnet ist und daß eine Klappe (21) zum Öffnen und Schließen der Düsenöffnungen (19) drehbar in einem Halter angeordnet ist, der an der Dampfverteilungsdüse (18) im Bereich der Düsenöffnungen (19) angebracht ist.

2. Einrichtung nach Anspruch 1, dadurch gekennzeichnet, daß das als Dampfverteilungsdüse (18) ausgebildete Ende der Abblaseleitung (11) parallel zum Boden (17) des Behälters (14) und parallel zur Seitenwand (16) des Behälters geführt ist.

3. Einrichtung nach Anspruch 2, dadurch gekennzeichnet, daß die Düsenöffnungen (19) in der oberen Hälfte des Leitungsquerschnittes neben dem Bündel von Wärmetauscherrohren (15) in einem Winkelbereich von 22,5° bis 67,5° angeordnet sind.

4. Einrichtung nach Anspruch 3, dadurch gekennzeichnet, daß die Klappe (21) die Düsenöffnungen verschließt, wenn sie sich in der Stellung (51 a) befindet, und als Leitblech dient, wenn sie sich in einer anderen Stellung (51 b) befindet.

5. Einrichtung nach Anspruch 4, dadurch gekennzeichnet, daß die Klappe (21) in jeder ihrer jeweiligen Stellungen (51 a, 51b) verriegelbar ist.

6. Einrichtung nach einem der vorhergehenden Ansprüche, dadurch gekennzeichnet, daß die Klappe (21) mit einem Gegengewicht (23) versehen ist.

7. Einrichtung nach einem der vorhergehenden Ansprüche, gekennzeichnet, durch eine Einrichtung zur Beschickung der Abblaseleitung (11) mit Inertgas über eine Leitung (25), wenn die Klappe (21) die Düsenöffnungen schließt, wodurch das Inertgas in der Abblaseleitung bis zur Verdrängung durch Dampft vorhanden ist.

8. Einrichtung nach Anspruch 7, dadurch gekennzeichnet, daß durch Öffnen eines Ventils (27) die Abblaseleitung (11) und die Dampfverteilungsdüse (18) spülbar sind.

9. Einrichtung nach einem der vorhergehenden Ansprüche, dadurch gekennzeichnet, daß der Gasraum (13) des Behälters (14) mit einer Abgasreinigungsanlage des Kernkraftwerkes und der Wasserraum (12) des Behälters mit der Abwasseraufbereitungsanlage des Kernkraftwerkes verbunden ist.

10. Einrichtung nach Anspruch 9, dadurch gekennzeichnet, daß der Behälter (14) einen Überlauf (43) aufweist, der mit einem redundanten Behälter (14) und/oder der Abwasseraufbereitungsanlage verbunden ist.

11. Einrichtung nach einem der vorhergehenden Ansprüche, dadurch gekennzeichnet, daß eine obere Wand (44) des Behälters (14) eine Entlastungsöffnung (45), die mit einer Abdeckplatte (46) versehen ist, aufweist.

**Revendications**

1. Appareil pour réaliser le refroidissement d'urgence d'un générateur de vapeur (1) d'une centrale nucléaire, comportant un circuit fermé pour la condensation de la vapeur purgée et le renvoi du condensat obtenu au générateur de vapeur (1) sous la forme d'eau d'alimentation, dans lequel une canalisation de purge (11) est disposée de manière à diriger la vapeur dans un réservoir fermé (14) comportant un espace pour l'eau (12) et un espace pour le gaz (13) et une extrémité de la canalisation de purge (11) débouche à l'intérieur de l'espace pour l'eau (12) afin de répartir le vapeur, caractérisé en ce qu'un faisceau de tubes d'échange de chaleur (15) s'étend dans l'espace pour l'eau du réservoir (14), l'extrémité de la canalisation de purge (11) débouchant dans l'espace pour l'eau est coudée et est réalisée sous la forme d'une buse de distribution de vapeur (18) comportant plusieurs orifices (19), la buse de distribution de vapeur (18) est disposée essentiellement audessous et latéralement par rapport au faisceau des tubes d'échange de chaleur, et un volet (21) permettant d'ouvrir et de fermer les orifices (19) de la buse est monté de façon à pouvoir tourner dans un support (22) raccordé à la buse de distribution de vapeur (18) dans la région des orifices (19) de la buse.

2. Appareil selon la revendication 1, dans lequel l'extrémité de la canalisation de purge (11), réalisée sous la forme d'une buse de distribution de vapeur (18), s'étent parallélement à la partie inférieure (17) du réservoir (14) et parallèlement à une paroi latérale (16) du réservoir.

3. Appareil selon la revendication 2, dans lequel les orifices (19) de la buse sont disposés dans la moitié supérieure de la section transversale de la canalisation au voisinage du faisceau des tubes d'échange de chaleur (15) dans un secteur angulaire de la canalisation situé dans une gamme allant de 22,5° à 67,5°.

4. Appareil selon la revendication 3, dans lequel le volet (21) obture les orifices de la buse lorsqu'il se trouve dans une position (51a) et sert de déflecteur lorsqu'il se trouve dans une autre position (51b).

5. Appareil selon la revendication 4, dans lequel le volet (21) peut être bloqué dans chacune de ses positions (51a, 51b).

6. Appareil selon l'une quelconque des revendications précédentes, dans lequel le volet (21) est équipé d'un contrepoids (23).

7. Appareil selon l'une quelconque des revendications précédentes, comportant des moyens pour charger la canalisation de purge (11) avec un gaz inert par l'intermédiaire d'une canalisation (25) lorsque le volet (21) ferme les orifices de la buse, ce qui permet au gaz inerte d'être présent dans la canalisation de purge jusqu'à ce qu'il soit déplacé par la vapeur.

8. Appareil selon la revendication 7, dans lequel la canalisation de purge (11) et la buse de distribution de vapeur (18) peuvent être vidangées moyennant l'ouverture d'une vanne (27).

9. Appareil selon l'une quelconque des revendications précédentes, dans lequel l'espace pour le gaz (13) du réservoir (14) est raccordé à une unité d'épuration du gaz résiduaire de la centrale nucléaire et que l'espace pour l'eau (12) du réservoir est raccordé à une unité de traitement de l'eau résiduaire de la centrale nucléaire.

10. Appareil selon la revendication 9, dans lequel la cuve (14) comporte un trop-plein (43) raccordé à un second réservoir (14) et/ou à l'unité de traitement de l'eau résiduaire.

11. Appareil selon l'une quelconque des revendications précédentes, dans lequel une paroi supérieure (44) du réservoir (14) contient un évent de décharge (45) comportant une plaque formant capot (46).

# Fig.1

Fig. 2

Fig. 3

Fig. 4

3